Europäisches Patentamt

(19) European Patent Office

Office européen des brevets

(11) Publication number: **0 319 627 B1**

(12) **EUROPEAN PATENT SPECIFICATION**

(45) Date of publication of patent specification: **01.07.92**   (51) Int. Cl.⁵: **B60P 1/64**

(21) Application number: **87310910.2**

(22) Date of filing: **11.12.87**

(54) **Freight container lifting means.**

(43) Date of publication of application:
**14.06.89 Bulletin 89/24**

(45) Publication of the grant of the patent:
**01.07.92 Bulletin 92/27**

(84) Designated Contracting States:
**AT BE CH DE ES FR GB GR IT LI LU NL SE**

(56) References cited:
**FR-A- 2 306 902**
**FR-A- 2 344 417**

(73) Proprietor: **GEORGE BLAIR LIMITED**
**Armond Carr Works Tow Law**
**County Durham DL13 4HH(GB)**

(84) Designated Contracting States:
**CH GB GR LI SE**

(73) Proprietor: **STEELTECH MANUFACTURING**
**INC.**
**7100 West Calumet Road**
**Milwaukee, Wisconsin 53223(US)**

(84) Designated Contracting States:
**BE DE ES FR IT LU NL AT**

(72) Inventor: **Bishop, Frank Walter**
**Kerkebeekstraat 106**
**Jabbeke B-8202 Varsenare(BE)**

(74) Representative: **Gura, Henry Alan et al**
**MEWBURN ELLIS & CO. 2/3 Cursitor Street**
**London EC4A 1BO(GB)**

## Description

This invention relates to freight container lifting means and more particularly to such means for lifting and transporting I.S.O. freight containers without the need to pre-load the containers onto a dedicated intermediate supporting system prior to loading of the container onto transportation vehicles.

Freight containers are produced in a series of standard sizes, usually 8 feet in width by 20 feet, 30 feet or 40 feet in length and of height between 4 feet and 8.5. feet, and are known as I.S.O. containers.

These containers are provided with corner fittings in the faces of which are formed generally rectangular openings in which can be received releasable securing means, commonly known as twistlocks, whereby the containers can be secured together or secured to a chassis or platform of a transporting vehicle, it being well-established practice to transport a plurality of such containers on a common platform provided with appropriately located securing means for co-operation with the corner fittings of the containers thereon.

There may, however, be a requirement to transport individual freight containers, for example for munitions purposes, and it would clearly be impractical to utilise multi-container transport means for such purposes.

It is, however, well established practice to provide various types of hook-lift, self-loading and unloading vehicles, commonly known as 'swap-body' vehicles, that are capable of loading, unloading and transporting various shapes and sizes of skips and like containers.

More particularly, such a vehicle is provided with a hydraulically-operated lifting mechanism that includes a hook adapted to be attached to a suitably-positioned lifting bar or recess on the container to be handled, whereby said container can be raised onto or unloaded from the vehicle chassis without the necessity for an intermediate pallet or platform.

Such containers must therefore be provided with the appropriate hook-receiving means thereon before they can be loaded or unloaded by such lifting mechanisms.

Further, and if there are no intermediate pallets involved, the underside of the floors of such containers are provided with longitudinally extending strengthening rails or the like which co-operate with rollers on the rear end of the vehicle chassis during loading and unloading of the containers onto the chassis, the loading forces being exerted through said rails and rollers.

Conventional I.S.O. containers are not provided with attachment means suitable for receiving the hooks of much lifting mechanisms, nor are they provided with such longitudinally-extending rails on the undersurfaces thereof.

Thus the existing hook-lift vehicles are not immediately suited to handling I.S.O. containers other than through intermediate pallets.

It has been proposed, for example in FR-A-2344417, to provide a transporting vehicle in which the conventional hook-lift mechanism is replaced by an arrangement incorporating a pivot bar adapted to be releasably connected to the container whereby the container can be manoeuvred onto the transporting vehicle without the use of intermediate pallets.

However, such a vehicle is of specialist, non-conventional construction, incorporating a complex double chassis with numerous pivotal linkages.

It would be desirable to be able to utilise conventional hook-lift vehicles to handle I.S.O containers without the necessity of altering the containers themselves and without having to provide an intermediate loading pallet or platform.

According to the present invention there is provided means for adapting a hook-lift vehicle, having a hydraulically-operated lifting mechanism on the chassis thereof, to load and unload freight containers having conventional corner fittings at the corners thereof, the means comprising an adaptor frame for attachment to, to be movable by, the lifting mechanism, said adaptor frame including releasable securing means thereon for co-operation with each of the four corner fittings of one end of a freight container whereby said frame can be secured to said container, and a pair of laterally-spaced support surfaces for location at or adjacent the rear end of the vehicle chassis one to each side of said chassis, said surfaces being pivotal about a substantially horizontal axis extending transversely of the chassis and being spaced apart by a distance substantially equal to the width of the container, the arrangement being such that, subsequent to securing of the adaptor frame to the front end of a container on the ground and on actuation of the lifting mechanism, the front end of the container is drawn upwardly and forwardly relative to the vehicle chassis until the outer lower side regions of the container engage said opposed support surfaces, the floor of the container and the support surfaces making an acute angle with the horizontal, continued actuation of the lifting mechanism drawing the container over said pivoting surfaces and onto the chassis.

Preferably the adaptor frame comprises a body portion including means thereon for attachment of the hook of the lifting mechanism, and a pair of opposed, releasable securing means, conveniently twistlocks, for co-operation one with each of the two lower corner fittings of the one end of a freight container, the frame further comprising a pair of adjustable arm members each of which is pivotally mounted, at or adjacent one end thereof, to the body portion and the other end of each of which carries a further releasable securing means, again conveniently a twistlock, for co-operation one with each of the two upper corner fittings at the one end of the said container.

The arm members are adjustable such that the securing means carried thereby can be positioned to co-operate with corner fittings at various locations, thus enabling the adaptor frame to be secured to containers of differing heights.

In one embodiment of the invention, the arm members are each mounted to the body portion at a pivot point adjacent one end thereof to be pivotal about said pivot point and movable axially of the arm member relative to said pivot point.

In an alternative embodiment of the invention, each arm member comprises telescopically interconnected portions, the free end of one telescopic portion being pivotally mounted to the body portion and the free end of the other telescopic portion carrying a further releasable securing means, preferably a twistlock.

The pivotal support surfaces are conveniently mounted on outriggers adapted to be secured to the vehicle chassis such that said surfaces are laterally spaced each to receive thereon the associated lower side regions of the container being handled whereby the load of said container is distributed over said surfaces during drawing of the container onto the vehicle chassis.

Each surface may comprise a low friction slider plate over which the container moves as it is drawn onto the vehicle chassis, or, alternatively, said surface may comprise the upper run of a continuous belt, preferably of high friction material, and adapted to move with the container on said drawing of the container onto the vehicle chassis.

Preferably the adaptor means includes releasable securing means associated with each support surface such that, with a container loaded on the vehicle chassis and with the rear end of the container located on said surfaces, said releasable securing means, conveniently twistlocks, can be moved to operative positions projecting through said surfaces and co-operating with the lower corner fittings of the rear end of the container to secure said end of the container to the chassis.

The adaptor means may further comprise a pair of laterally-spaced support surfaces fixed at or adjacent the front regions of the chassis and adapted to receive thereon the front end of a container in its loaded position on the vehicle chassis.

The fixed support surfaces may be apertured whereby associated releasable securing means, conveniently twistlocks, can extend therethrough to co-operate with the lower corner fittings of the front end of the loaded container to secure said end of the container to the chassis.

By way of example only, an embodiment of the invention will now be described in greater detail with reference, to the accompanying drawings of which:

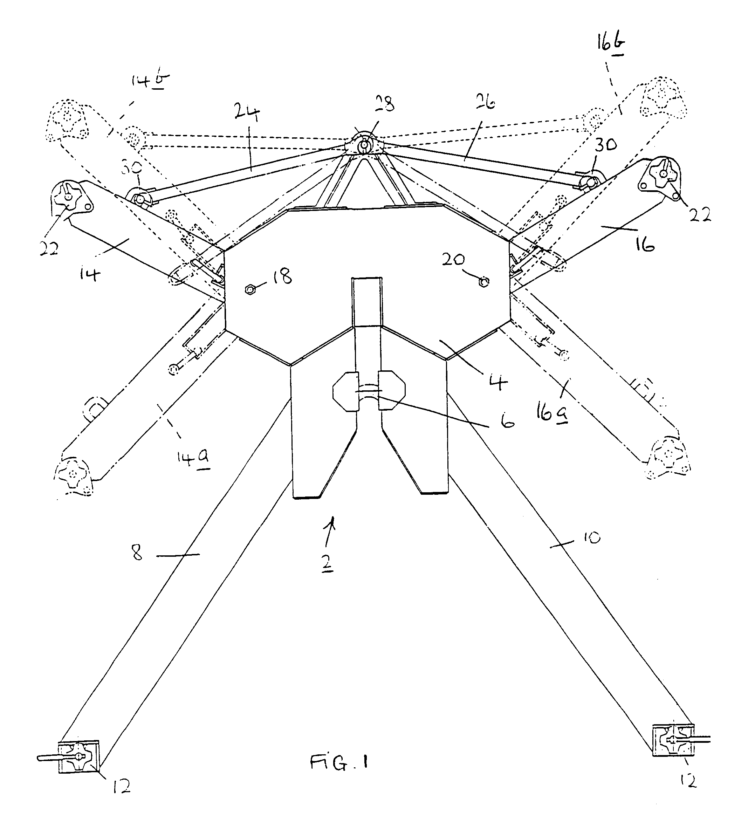

Fig. 1 shows an adaptor frame of adaptor means according to the invention;

Fig. 2 is an end view of a support surface and associated mechanism of adaptor means according to the invention;

Fig. 3 is a side view of the support surface of Fig. 4;

Figs. 4 and 5 show adaptor means according to the invention on a hook-lift vehicle in two different positions of the lifting mechanism thereof.

Referring to the drawings, the illustrated adaptor means comprises an adaptor frame indicated generally at 2 and including a central body portion 4 provided with a lifting hook bar 6. A pair of arms 8,10 are rigidly secured to, to extend downwardly and outwardly from, the body portion 4, the free end of each arm 8,10 carrying a twistlock 12, the twistlocks 12 being spaced 8 feet apart for co-operation with the lower corner fittings of any standard I.S.O. container.

A pair of upper arms 14,16 are each mounted to the body portion 4 to be pivotal relative thereto about associated pivot points 18,20, each arm 14,16 being provided with a slot therein in which the pivot points 18,20 are received whereby each arm 14,16 can also move axially thereof relative to the associated pivot point 18,20 and to the plate portion 4.

The free ends of the arms 14,16 are each provided with a twistlock 22.

The combination of the pivotability of the arms 14,16 about the pivot points 18,20 and the slidability of said arms relative to their pivot points enables the twistlocks 22 thereon to be located at positions which align with the upper corner fittings of an I.S.O. container of any standard height.

More particularly the arms shown in dotted lines at 14a, and 16a are positioned to suit, typically, a 4 feet high container, while those shown in dotted lines at 14b and 16b are positioned to suit, typically, a container 8 feet 6 inches high.

A pair of removable, rigid stays 24,26 may extend between the body portion 4 and each arm 14,16, one end of each stay being pivotally mounted at 28 to the body portion 4 and the other end of each stay being pivotally mounted at 30 to the associated arm. The pivotal mountings at 30 are each such as to permit limited linear movement of the arms 14,16 relative to the associated stays 24,26. The stays 24,26 serve to support the arms 14,16 in their uppermost positions above the horizontal and therefore assist an operator when locating the twistlocks 22 in the upper corner fittings of the associated container. The relative movement available at the pivot points 30 between the arms 14,16 and the stays 24,26 enables the twistlocks 22 to be accurately positioned for different height containers - the arms 14,16 are shown in position for, typically, a container 7 feet 6 inches high.

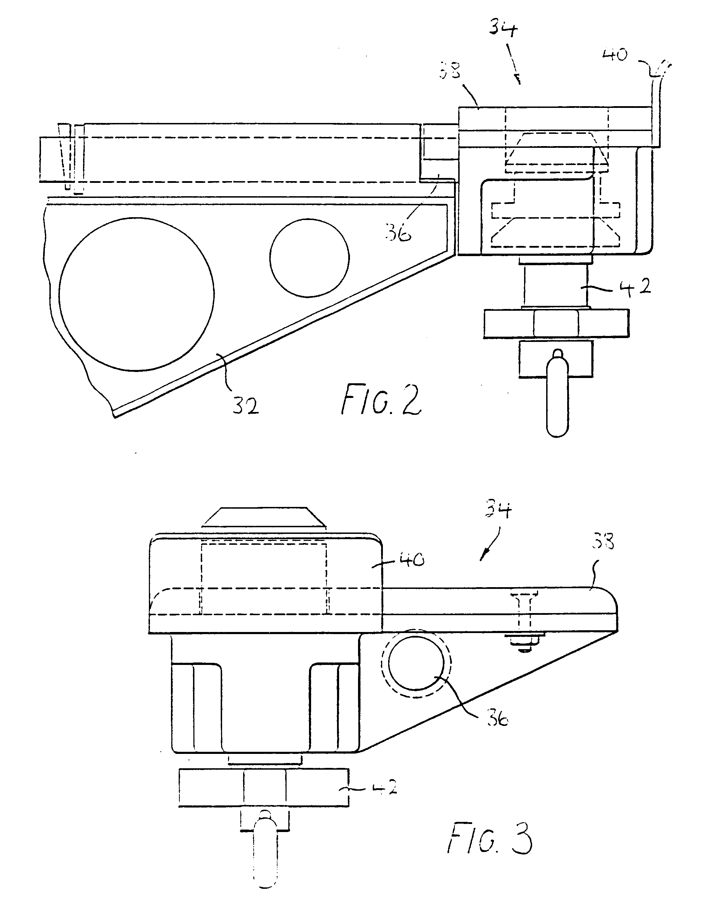

The adaptor means further comprises a mirror image pair of outrigger side plate assemblies as shown in Fig. 2 and 3, one for location to each side of the rear end of the chassis of the associated transportation vehicle.

The illustrated assembly includes an outrigger 32 which is designed to suit the particular vehicle, the outer ends of the opposed outriggers being spaced apart to accept the standard 8 foot width of I.S.O. container. Each outrigger is fitted with a container support mechanism 34 pivotal relative to the outrigger on a shaft 36, the support mechanism including a slider plate 38 forming a support surface of low friction material such as NYLATRON - GS (trade mark). The slider plate 38 is thus pivotal relative to the outrigger 32 and vehicle chassis about an axis extending transversely of said chassis to accommodate the loading angle of the container as will be detailed below.

The outer edge of the slider plate 38 is equipped with an upright guide plate 40 which ensures proper alignment of the container during loading and unloading.

The surface of the slider plate 38 may comprise low friction material, or may comprise a roller or ball race or a flat belt or the upper run of a continuous belt of high friction material, all such as to allow loads imposed by the combined weight of the container and the carrying vehicle to be spread along the bottom edge of the bottom side rails of the I.S.O. container without deforming or damaging said side rails.

The support mechanism is equipped with a fully retractable twistlock 42 which can be engaged in the bottom aperture of the rear lower corner fitting on the container thereby fully to secure the container to the hook-lift vehicle after the loading operation is completed.

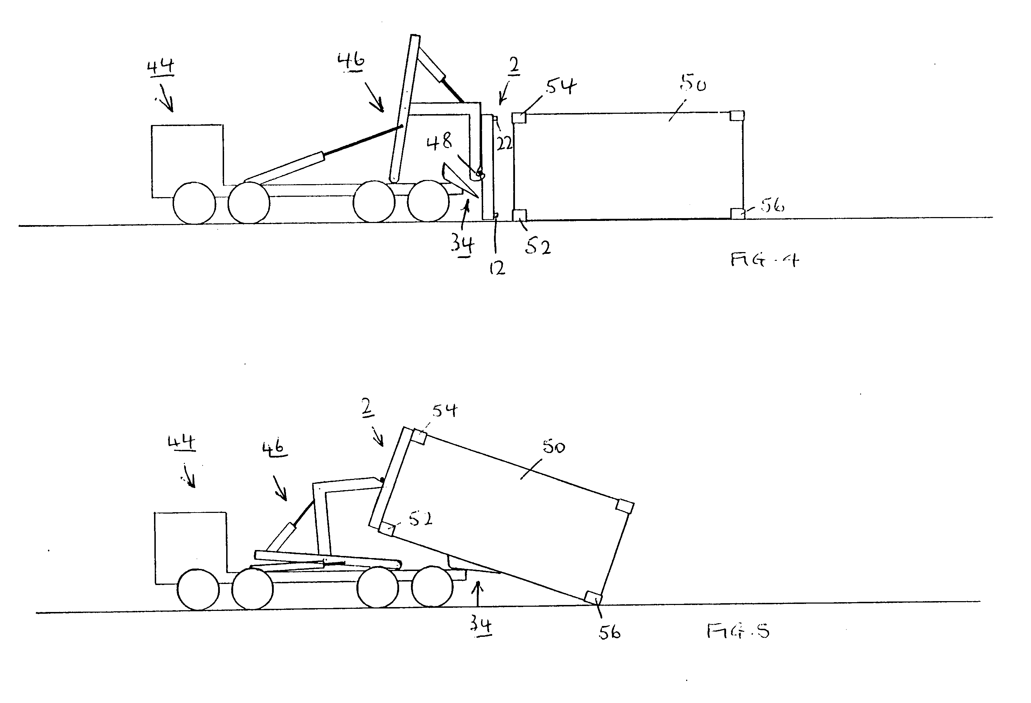

The described apparatus operates as follows with particular reference to Figs. 4 and 5.

The two rear support mechanisms 34 are manually affixed to the rear outriggers 32 on a conventional hook-lift vehicle indicated generally at 44 and provided with a standard hydraulically-operated lifting mechanism 46 including a lift-hook 48.

The adaptor frame 2, which is resting substantially vertically on the ground, is engaged onto the vehicle lift-hook 48 by means of the lifting bar 6, and said frame is then brought into contact with the front end of a container 50 to be loaded resting on the ground.

The pivotal arms 14,16 held by the stays 24,26 are positioned such that the twistlocks 22 are aligned with and engaged into the front apertures of the upper corner fittings 54 of the container 50.

The lower twistlocks 12 are then manually engaged into the front apertures of the bottom corner fittings 52 of the container 50 and are locked therein. Attachment of the frame 2 to the container 50 is completed by locking the upper twistlocks 22 to the corner fittings 54.

The operation of self-loading is then identical with that required for the self-loading of dedicated hook-lift flatracks, in that the front end of the container 50 is first of all lifted to a level above that of the slider plates 38 with the container pivoting about its trailing edge.

As the lift-hook 48 continues its arc, the vehicle 44 is steered back under the raised container 50 until the slider plates 38 engage the underside of the container and adopt the angle of the floor of the container 50, as shown in Fig. 5. The lift-hook 48 continues its arc as the lifting mechanism 46 draws it forward whereby the container 50 is drawn onto the vehicle chassis and slides along the plates 38, said plates pivoting into a horizontal position as the container 50 is finally loaded onto the chassis.

At the completion of loading, the rear of the I.S.O. container 50 is automatically aligned by the guide plates 40, allowing the retractable twistlocks 42 to be manually engaged and locked into the bottom apertures on the lower corner fittings 56 at the rear of the container.

The front of the container 50 is secured to and supported by the vehicle hook-lifting mechanism 46. Alternatively front outriggers with slider plates and retractable twistlocks may be provided, these units being non-pivotal but in all other respects identical with the rear support mechanisms 34.

The precise construction of the adaptor means may vary from that illustrated. For example, the arms 14,16 may comprise telescopically interconnected portions to enable the required variation in the length of the arms to be achieved whereby they can accommodate containers of different heights. Other modifications and variations will be apparent to those skilled in the art.

Thus there are provided adaptor means which enable conventional hook-lift vehicles to handle I.S.O. containers without the necessity of altering the containers themselves and without having to provide an intermediate loading pallet or platform.

## Claims

1. Means for adapting a hook-lift vehicle, having a hydraulically-operated lifting mechanism (46) on the chassis thereof, to load and unload freight containers (50) having conventional corner fittings (52,54,56) at the corners thereof, the means comprising an adaptor frame (2) for attachment to, to be movable by, the lifting mechanism (46), said adaptor frame (2) including releasable securing means (12,22) thereon for co-operation with each of the four corner fittings (52,54) of one end of a freight container (50) whereby said frame (2) can be secured to said container (50), characterised by a pair of laterally-spaced support surfaces (34) for location at or adjacent the rear of the vehicle chassis one to each side of said chassis, said surfaces (34) being pivotal about a substantially horizontal axis (36) extending transversely of the chassis and being spaced apart by a distance substantially equal to the width of the container (50), the arrangement being such that, subsequent to securing of the adaptor frame (2) to the front end of a container (50) on the ground and on actuation of the lifting mechanism (46), the front end of the container (50) is drawn upwardly and forwardly relative to the vehicle chassis until the outer lower side regions of the container (50) engage said opposed support surfaces (34), the floor of the container (50) and the support surfaces (34) making an acute angle with the horizontal, continued acutation of the lifting mechanism (46) drawing the container (50) over said pivoting surfaces (34) and onto the chassis.

2. Adaptor means as claimed in claim 1 in which the adaptor frame (2) comprises a body portion (4) including means (6) thereon for attachment of the hook (48) of the lifting mechanism (46), and a pair of opposed, releasable securing means (12) for co-operation one with each of the two lower corner fittings (52) of the one end of a freight container (50), the frame (2) further comprising a pair of adjustable arm members (14,16) each of which is pivotally mounted, at or adjacent one end thereof, to the body portion (4), and the other end of each of which carries a further releasable securing means (22) for co-operation one with each of the two upper corner fittings (54) at the one end of the container (50).

3. Adaptor means as claimed in claim 2 in which the releasable securing means for co-operation with the lower corner fittings (52) at the one end of the container (50) each comprises a twistlock (12).

4. Adaptor means as claimed in claim 2 or claim 3 in which the arm members (14,16) are each mounted to the body portion (4) at a pivot point (18,20) adjacent one end thereof to be pivotal about said pivot point (18,20) and to be movable axially of the arm member (14,16) relative to said pivot point (18,20).

5. Adaptor means as claimed in claim 2 or claim 3 in which each arm member (14,16) comprises telescopically interconnected portions, the free end of one telescopic portion being pivotally mounted to the body portion (4) and the free end of the other telescopic portion carrying a further releasable securing means.

6. Adaptor means as claimed in any one of claims 2 to 5 in which the further releasable means for co-operation with the upper corner fittings (54) at the one end of the container (50) each comprises a twistlock (22).

7. Adaptor means as claimed in any one of claims 1 to 6 in which the pivotal surfaces (34) are mounted on outriggers (32) adapted to be secured to the vehicle chassis such that said surfaces (34) are laterally spaced each to receive thereon the associated lower side regions of the container (50) being handled whereby the load of said container (50) is distributed over said surfaces (34) during drawing of the container (50) onto the vehicle chassis.

8. Adaptor means as claimed in claim 7 in which each surface comprises a low friction slider plate (38) over which the container (50) moves as it is drawn onto the vehicle chassis.

9. Adaptor means as claimed in claim 7 in which each surface comprises the upper run of a continuous belt of a material of high friction adapted to move with the container (50) on drawing of the container (50) onto the vehicle chassis.

10. Adaptor means as claimed in any one of claims 1 to 9 and including releasable securing (42) means associated with each support surface (34) such that, with a container (50) loaded on the vehicle chassis and with the rear end of the container (50) located on said surfaces (34), said releasable securing means (42) can be moved to an operative position projecting through said surfaces (34) and co-operating with the lower corner fittings (56) of the rear end of the container (50) to secure said end of the container (50) to the chassis.

11. Adaptor means as claimed in claim 10 in which the releasable securing means associated with each support surface (34) comprises a twistlock (42).

12. Adaptor means as claimed in any one of claims 1 to 11 and further comprising a pair of laterally-spaced support surfaces fixed at or adjacent the front regions of the chassis and adapted to receive thereon the front end of a container (50) in its loaded position on the vehicle chassis.

13. Adaptor means as claimed in claim 12 in which the fixed support surfaces are apertured whereby associated releasable securing means can extend therethrough to co-operate with the lower corner fittings (52) of the front end of the loaded container (50) to secure said end of the container (50) to the chassis.

14. Adaptor means as claimed in claim 13 in which the releasable securing means extending through the fixed support surfaces each comprise a twistlock.

**Revendications**

1. Moyen pour adapter un véhicule élévateur à crochet, ayant un mécanisme élévateur à commande hydraulique (46) sur son châssis, pour charger et décharger des conteneurs (50) ayant des ferrures conventionnelles de coin (52, 54, 56) en leurs coins, le moyen comprenant une structure d'adaptation (2) pour fixation à et pour être mobile par le mécanisme élévateur (46), ladite structure d'adaptation (2) comportant des moyens libérables de fixation (12, 22) pour coopération avec chacune des quatre ferrures de coin (52, 54) d'une extrémité d'un conteneur (50) pour qu'ainsi ladite structure (2) puisse être fixée audit conteneur (50), caractérisé par deux surfaces latéralement espacées de support (34) pour une localisation sur ou près de l'arrière du châssis du véhicule, une de chaque côté dudit châssis, lesdites surfaces (34) étant pivotantes autour d'un axe sensiblement horizontal (36) s'étendant transversalement au châssis et étant espacées d'une distance sensiblement égale à la largeur du conteneur (50), l'agencement étant tel que, à la suite de la fixation de la structure d'adaptation (2) à l'extrémité avant d'un conteneur (50), sur le sol et lors de l'actionnement du mécanisme élévateur (46), l'extrémité avant du conteneur (50) soit attirée vers le haut et vers l'avant relativement au châssis du véhicule jusqu'à ce que les régions latérales inférieures externes du conteneur (50) engagent lesdites surfaces opposées de support (34), le plancher du conteneur (50) et les surfaces de support (34) formant un angle aigu avec l'horizontale, l'actionnement continu du mécanisme élévateur (46) attirant le conteneur (50) sur lesdites surfaces pivotantes (34) et sur le châssis.

2. Moyen d'adaptation selon la revendication 1 où la structure d'adaptation (2) comprend une portion de corps (4) comportant un moyen (6) pour fixation du crochet (48) du mécanisme élévateur (46) et une paire de moyens opposés et libérables de fixation (12) pour coopération de chacun avec l'une des deux ferrures inférieures de coin (52) de la première extrémité d'un conteneur (50), la structure (2) comprenant de plus une paire d'organes formant bras réglables (14, 16) dont chacun est monté pivotant, sur ou à proximité d'une extrémité, à la portion de corps (4) et l'autre extrémité de chacun porte un autre moyen libérable de fixation (22) pour une coopération à raison d'un avec chacun des deux ferrures supérieures de coin (54) à la première extrémité du conteneur (50).

3. Moyen d'adaptation selon la revendication 2 où chaque moyen libérable de fixation pour une coopération avec les ferrures inférieures de coin (52) à la première extrémité du conteneur (50) comprend un verrou tournant (12).

4. Moyen d'adaptation selon la revendication 2 ou la revendication 3, où chacun des organes formant bras (14, 16) est monté sur la portion de corps (4) en un point de pivotement (18, 20) à proximité d'une extrémité pour pouvoir pivoter autour dudit point (18, 20 ) et pour être mobile axialement à l'organe formant bras (14, 16) relativement audit point de pivotement (18, 20).

5. Moyen d'adaptation selon la revendication 2 ou la revendication 3 où chaque organe formant bras (14, 16) comprend des portions télescopiquement interconnectées, l'extrémité libre d'une portion télescopique étant montée pivotante sur la portion de corps (4) et l'extrémité libre de l'autre portion télescopique portant un autre moyen libérable de fixation.

6. Moyen d'adaptation selon l'une quelconque des revendications 2 à 5 où l'autre moyen libérable pour une coopération avec les ferrures supérieures de coin (54) à l'extrémité du conteneur (50) comprend un verrou tournant (22).

7. Moyen d'adaptation selon l'une quelconque des revendications 1 à 6 où les surfaces pivotantes (34) sont montées sur des consoles (32) adaptées à être fixées au châssis du véhicule de manière que lesdites surfaces (34) soient latéralement espacées pour recevoir les régions latérales inférieures associées du conteneur (50) qui est manipulé pour qu'ainsi la charge dudit conteneur (50) soit distribuée sur lesdites surfaces (34) pendant que l'on tire le conteneur (50) sur le châssis du véhicule.

8.  Moyen d'adaptation selon la revendication 7 où chaque surface comprend une plaque coulissante à faible coefficient de friction (38) sur laquelle le conteneur (50) se déplace tandis qu'il est tiré sur le châssis du véhicule.

9.  Moyen d'adaptation selon la revendication 7 où chaque surface comprend le tronçon supérieur d'une bande continue en un matériau à fort coefficient de friction,adaptée à se déplacer avec le conteneur (50) lorsqu'on tire le conteneur (50) sur le châssis du véhicule.

10. Moyen d'adaptation selon l'une quelconque des revendications 1 à 9 et comprenant un moyen de fixation libérable (42) associé à chaque surface de support (34) de manière que, avec un conteneur (50) chargé sur le châssis du véhicule et avec l'extrémité arrière du conteneur (50) placée sur lesdites surfaces (34), ledit moyen libérable de fixation (42) puisse être déplacé à une position active dépassant à travers lesdites surfaces (34) et coopérant avec les ferrures inférieures de coin (56) de l'extrémité arrière du conteneur (50) pour maintenir ladite extrémité du conteneur (50) sur le châssis.

11. Moyen d'adaptation selon la revendication 10 où le moyen de fixation libérable associé à chaque surface de support (34) comprend un verrou tournant (42).

12. Moyen d'adaptation selon l'une quelconque des revendications 1 à 11 et comprenant de plus une paire de surfaces latéralement espacées de support qui sont fixées sur ou près des régions avant du châssis et adaptées à recevoir l'extrémité avant d'un conteneur (50) à sa position chargée sur le châssis dudit véhicule.

13. Moyen d'adaptation selon la revendication 12 où les surfaces fixées de support sont ouvertes et ainsi des moyens associés libérables de fixation peuvent les traverser pour coopérer avec les ferrures inférieures de coin (52) de l'extrémité avant du conteneur chargé (50) pour maintenir ladite extrémité du conteneur (50) sur le châssis.

14. Moyen d'adaptation selon la revendication 13 où chaque moyen libérable de fixation traversant les surfaces fixes du support comprend un verrou tournant.

**Patentansprüche**

1.  Einrichtung zur Anpassung an ein Hakenhebefahrzeug mit einem hydraulisch betätigbaren Hebemechanismus (46) auf dem Fahrgestell desselben, um Frachtbehälter (50) ein- und auszuladen, die mit herkömmlichen Eckbeschlägen bzw. -fittings (52, 54, 56) an ihren Ecken versehen sind, wobei die Einrichtug einen Adapter-bzw. Zwischen-Rahmen (2) für die Befestigung am Hebemechanismus (46) aufweist, um mittels diesem bewegbar zu sein, am genannten Adapter-Rahmen (2) lösbare Befestigungseinrichtungen (12, 22) für das Zusammenwirken mit jedem der vier Eckbeschläge (52, 54) eines Endes eines Frachtbehälters (50) vorgesehen sind, wodurch der genannte Rahmen (2) am genannten Behälter (50) befestigbar ist, gekennzeichnet durch ein Paar von seitlich im Abstand voneinander angeordneten Stützflächen (34), die dazu bestimmt sind, jeweils auf einer Seite an der oder angrenzend an die Rückseite des Fahrgestells in Stellung gebracht zu werden, wobei die genannten Flächen (34) um eine im wesentlichen horizontale Achse (36) schwenkbar sind, die sich quer zum Fahrgestell in einem Abstand erstreckt, der im wesentlichen gleich der Breite des Behälterrs (50) ist, wobei die Anordnung so ausgebildet ist, daß folgend auf die Befestigung des Adapter-Rahmens (2) am Vorderende eines Behälters (50) auf dem Boden und bei Betätigung des Hebemechanismus (46) das Vorderende des Behälters (50) in bezug auf das Fahrgestell des Fahrzeugs aufwärts und vorwärts gezogen wird, bis die äußeren unteren Seitenbereiche des Behälters (50) in die genannten gegenüberliegenden Stützflächen (34) eingreifen bzw. an diesen angreifen, sodaß der Boden des Behälters (50) und die Stützflächen (34) einen spitzen Winkel mit der Horizontalen bilden und die fortgesetzte Betätigung des Hebemechanismus (46) den Behälter (50) über die genannten schwenkbaren Flächen (34) und auf das Fahrgestell hinauf zieht.

2.  Adapter-Einrichtung nach Anspruch 1, in der der Adapter-Rahmen (2) einen Körperabschnitt (4) umfaßt, auf dem eine Einrichtung (6) zur Befestigung des Hakens (48) des Hebemechanismus (46) und ein Paar von gegenüberliegenden, lösbaren Befestigungseinrichtungen (12) vorgesehen sind, von denen jede mit je einem der unteren Eckbeschläge (52) des einen Endes eines Frachtbehälters (50) zusammenwirkt, und der Rahmen (2) weiters ein Paar von einstellbaren Armelementen (14, 16) aufweist, von denen jedes an einem seiner Enden oder angrenzend an dasselbe am Körperabschnitt (4) dreh- bzw. schwenkbar montiert ist, wobei das andere Ende jedes der Elemente eine weitere lösbare Befestigungseinrichtung (22) zum Zusammenwirken mit je einem der beiden oberen Eckbeschläge (54) am einen Ende des Behälters (50) trägt.

3. Adapter-Einrichtung nach Anspruch 2, in der jede der lösbaren Befestigungseinrichtungen zum Zusammenwirken mit den unteren Eckbeschlägen (52) am einen Ende des Behälters (50) einen Riegel- bzw. Hammerbolzen bzw. Verrigelungszapfen (12) aufweist.

4. Adapter-Einrichtung nach Anspruch 2 oder 3, in der jedes der Armelemente (14, 16) am Körperabschnitt (4) in einem Drehpunkt (18,20) angrenzend an ein Ende desselben montiert ist, um um den genannten Drehpunkt (18,20) herum schwenkbar und axial vom Armelement (14,16) in bezug auf den genannten Drehpunkt (18,20) bewegbar zu sein.

5. Adapter-Einrichtung nach Anspruch 2 oder 3, in der jedes Armelement (14,16) teleskopisch verschiebbare, wechselseitig verbundene Abschnitte aufweist, wobei das freie Ende eines teleskopischen Abschnittes schwenkbar am Körperabschnitt (4) montiert ist und das freie Ende des anderen teleskopischen Abschnittes eine weitere lösbare Befestigungseinrichtung trägt.

6. Adapter-Einrichtung nach einem der Ansprüche 2 bis 5, in der jede der weiteren lösbaren Einrichtungen zum Zusammenwirken mit den oberen Eckbeschlägen (54) am einen Ende des Behälters einen Riegel- bzw. Hammerbolzen bzw. Verriegelungszapfen (22) aufweist.

7. Adapter-Einrichtung nach einem der Ansprüche 1 bis 6, in der die schwenkbaren Flächen (34) auf Auslegerbalken (32) montiert sind, die dazu ausgebildet sind, am Fahrgestell des Fahrzeugs so befestigt zu werden, daß die genannten Flächen (34) jeweils seitlich im Abstand voneinander angeordnet sind, um darauf die zugeordneten unteren Seitenbereiche des gehandhabten Behälters (50) aufzunehmen, wodurch die Ladung des genannten Behälters (50) über die genannten Flächen (34) während des Aufziehens des Behälters (50) auf das Fahrgestell des Fahrzeugs verteilt wird.

8. Adapter-Einrichtung nach Anspruch 7, in der jede Fläche eine Gleitplatte (38) mit geringem Reibungswiderstand aufweist, über die sich der Behälter (50) während des Hochziehens auf das Fahrgestell des Fahrzeugs bewegt.

9. Adapter-Einrichtung nach Anspruch 7, in der jede Fläche das obere Trum bzw. Teilstück eines kontinuierlichen Bandes aus einem Material mit hohem Reibungswiderstand aufweist, das dazu ausgebildet ist, sich mit dem Behälter (50) zu bewegen, wenn der Behälter (50) auf das Fahrgestell des Fahrzeugs hochgezogen wird.

10. Adapter-Einrichtung nach einem der Ansprüche 1 bis 9, die lösbare Befestigungseinrichtungen (42) aufweist, die jeder Stützfläche (34) auf solche Weise zugeordnet sind, daß, wenn ein Behälter (50) auf das Fahrgestell des Fahrzeugs aufgeladen ist und das hintere Ende des Behälters (50) auf den genannten Stützflächen (34) in Stellung gebracht ist, die genannten lösbaren Befestigungseinrichtungen (42) in eine Arbeitsstellung übergeführt werden können, in der sie sich durch die genannten Flächen (34) erstrecken bzw. diese durchsetzen und mit den unteren Eckbeschlägen (56) des hinteren Endes des Behälters (50) zusammenwirken, um das genannte Ende des Behälters (50) am Fahrgestell zu befestigen bzw. zu sichern.

11. Adapter-Einrichtung nach Anspruch 10, in der die jeder Stützfläche (34) zugeordnete, lösbare Befestigungseinrichtung einen Riegel- bzw. Hammerbolzen bzw. Verriegelungszapfen (42) aufweist.

12. Adapter-Einrichtung nach einem der Ansprüche 1 bis 11, und weiters umfassend ein Paar von seitlich im Abstand voneinander angeordneten Stützflächen, die an den oder angrenzend an die Vorderbereiche(n) des Fahrgestells befestigt und dazu ausgebildet sind, darauf das Vorderende eines Behälters (50) in seiner geladenen Position auf dem Fahrgestell des Fahrzeugs aufzunehmen.

13. Adapter-Einrichtung nach Anspruch 12, in der die feststehenden Stützflächen mit Öffnungen versehen sind, durch die sich zugeordnete, lösbare Befestigungseinrichtungen erstrecken können, um mit den unteren Eckbeschlägen (52) des vorderen Endes des geladenen Behälters (50) zusammenzuwirken, um das genannte Ende des Behälters (50) am Fahrgestell zu befestigen bzw. zu sichern.

14. Adapter-Einrichtung nach Anspruch 13, in der jede der lösbaren Befestigungseinrichtungen, die sich durch die feststehenden Stützflächen erstrecken, mit einem Riegel- bzw. Hammerbolzen bzw. Verriegelungszapfen versehen ist.

FIG. 1

10

FIG. 2

FIG. 3

FIG. 4

FIG. 5